# EUROPÄISCHE PATENTSCHRIFT

(11) **EP 2 774 249 B1**
(45) Veröffentlichungstag und Bekanntmachung des Hinweises auf die Patenterteilung: **23.03.2016**
(21) Anmeldenummer: 12791116.2
(22) Anmeldetag: 30.10.2012
(51) Int. Cl.: H02K 1/14, H02K 15/02

(54) **VERFAHREN ZUR HERSTELLUNG EINES RUNDEN STATORS UND ROLLIEREINRICHTUNG**
METHOD FOR PRODUCING A ROUND STATOR AND ROLLING DEVICE
PROCÉDÉ DE FABRICATION D'UN STATOR CIRCULAIRE ET DISPOSITIF DE GALETAGE

(30) Priorität: 03.11.2011 DE 102011085654
(43) Veröffentlichungstag der Anmeldung: 10.09.2014
(73) Patentinhaber: Continental Automotive GmbH, 30165 Hannover (DE)
(72) Erfinder: MAARES, Benjamin, 36251 Ludwigsau (DE); SCHEIN, Uwe, 34260 Kaufungen (DE)
(86) Internationale Anmeldenummer: PCT/EP2012/071457
(87) Internationale Veröffentlichungsnummer: WO 2013/064485

(56) Entgegenhaltungen:
- JP-A- H1 198 774
- JP-A- 2008 283 736
- US-A- 5 986 377

## Beschreibung

Die vorliegende Erfindung betrifft ein Verfahren zur Herstellung eines runden Stators.

Es ist bekannt, zur Herstellung eines derartigen Stators die entsprechenden Polzähne zu bewickeln, um eine Vielzahl von Polzähnen mit Einzelzahnwicklung zu erhalten. Es ist ferner bekannt, bewickelte Polzähne über Verschaltungsdrähte miteinander zu verschalten, so dass sich eine zusammenhängende zahnstangenförmige Polzahnreihe ergibt, wobei der Zusammenhang über die entsprechenden Verschaltungsdrähte zwischen den einzelnen Polzähnen hergestellt wird. Die einzelnen bewickelten Polzähne oder die zusammenhängende zahnstangenförmige Polzahnreihe werden dann manuell verrundet, um ein rundes Statorgebilde herzustellen. Diese Vorgehensweise ist entsprechend aufwendig und/oder es wird hierfür eine aufwendige Mechanik benötigt.

Aus der JP 2008-283736 A sind ein Verfahren und eine Vorrichtung bekannt, bei denen eine rohrförmige Wicklung aus einzelnen Leitern hergestellt und die Wicklung dann auf einem Gestell angeordnet wird. Eine riemenförmige Stahlplatte mit Schlitzen wird dann von außen um die Wicklung gewickelt. Auf diese Weise wird ein Statorkern mit radial innerer Wicklung und radial äußerer leistenförmiger Zahnplatte hergestellt.

Aus der US 5,986,377 A ist es bekannt, einen Stator herzustellen, indem einzelne zusammenhängende Polzähne gebogen werden, um ein ringförmiges Gebilde zu erhalten. Über die Art und Weise, in der die entsprechende Biegung durchgeführt wird, ist in dieser Veröffentlichung nichts ausgesagt.

Aus der JP 11-098774 A ist es bekannt, ein bandförmiges magnetisches Element um einen Wickelrahmen zu wickeln, die vom Band gebildeten Polzähne zu umwickeln und das Band in eine Ringform zu bringen, so dass die Polzähne nach außen weisen.

Der vorliegenden Erfindung liegt die Aufgabe zugrunde, ein Verfahren zur Herstellung eines runden Stators zu schaffen, mit dem sich der Stator mit besonders geringem Arbeits- und Zeitaufwand herstellen lässt.

Diese Aufgabe wird erfindungsgemäß durch ein Verfahren nach Anspruch 1 zur Herstellung eines runden Stators gelöst, das die folgenden Schritte aufweist:
- Einführen von bewickelten Polzähnen in den Einführungsabschnitt einer Nut, deren Querschnittsform an die Querschnittsform eines bewickelten Polzahnes angepasst ist, einer Rolliereinrichtung zur Ausbildung einer Polzahnreihe;
- Schieben der Polzahnreihe in einen die runde Endform des Stators wiedergebenden Ringabschnitt der Nut der Rolliereinrichtung und
- Herausnehmen des runden Statorgebildes aus der Nut der Rolliereinrichtung unter Zusammenhalten desselben und Weiterbearbeitung zur Ausbildung einer fertigen Statoreinheit.

Bei dem erfindungsgemäßen Verfahren findet eine mit einer Nut versehene Rolliereinrichtung Verwendung. Die bewickelten Polzähne werden in den Einführungsabschnitt der Nut dieser Rolliereinrichtung eingeführt, und es wird auf diese Weise eine Polzahnreihe ausgebildet. Die Polzahnreihe wird in einen Ringabschnitt der Nut der Rolliereinrichtung geschoben, der die runde Endform des Stators wiedergibt. Es entsteht auf diese Weise ein rundes Statorgebilde mit aneinandergereihten bewickelten Polzähnen, das unter Zusammenhalten des Gebildes aus der Nut der Rolliereinrichtung entnommen wird. Das Gebilde wird weiterhin zusammengehalten und in diesem Zustand weiterbearbeitet, bis eine fertige Statoreinheit hergestellt worden ist, bei der die einzelnen bewickelten Polzähne miteinander eine feste zusammenhängende Einheit bilden.

Für das erfindungsgemäße Verfahren können bereits bewickelte Polzähne eingesetzt oder die Polzähne können zum Erhalt einer Vielzahl von Polzähnen mit Einzelzahnwicklung vorher bewickelt werden.

Die bewickelten Polzähne können einzeln in den Einführungsabschnitt der Nut der Rolliereinrichtung eingeführt und dort zu einer Polzahnreihe zusammengesetzt werden. Bei einer anderen Ausführungsform des erfindungsgemäßen Verfahrens werden die Polzähne bewickelt und miteinander verschaltet, um eine zusammenhängende zahnstangenförmige Polzahnreihe zu erhalten, die in den Einführungsabschnitt der Nut der Rolliereinrichtung eingeführt wird. Bei dieser Ausführungsform werden daher die Polzähne über die Verschaltungsdrähte vor dem Einführen in die Nut der Rolliereinrichtung miteinander verbunden, und es wird eine zusammenhängende, aber immer noch flexible Polzahnreihe erhalten, die zahnstangenförmig ausgebildet ist. Die Polzahnreihe wird dann vom Einführungsabschnitt der Nut der Rolliereinrichtung in deren Ringabschnitt geschoben, um auf diese Weise ein rundes Statorgebilde herzustellen.

Die Länge des Ringabschnittes der Nut der Rolliereinrichtung entspricht etwa der Länge der im Einführungsabschnitt gebildeten Polzahnreihe oder der vor dem Einführungsabschnitt hergestellten zahnstangenförmigen Polzahnreihe, so dass im Ringabschnitt der Nut der Rolliereinrichtung ein geschlossener bzw. nahezu geschlossener Ring gebildet wird.

Die Polzähne oder die Polzahnreihe werden vorzugsweise in einen geradlinigen Einführungsabschnitt der Nut der Rolliereinrichtung eingeführt. Generell kann sich an den Einführungsabschnitt direkt der die runde Endform des Stators wiedergebende Ringabschnitt der Nut der Rolliereinrichtung anschließen, oder die Polzähne oder die Polzahnreihe können vom Einführungsabschnitt über einen spiralförmigen Übergangsabschnitt in den Ringabschnitt der Nut der Rolliereinrichtung geschoben werden. Die zuletzt genannte Ausführungsform hat den Vorteil, dass hier ein allmählicher Übergang vom Einführungsabschnitt zum Ringabschnitt mit geringer werdendem Krümmungsradius erfolgt.

Bei dem erfindungsgemäßen Verfahren wird das runde Statorgebilde aus der Nut der Rolliereinrichtung unter Zusammenhalten desselben herausgenommen. Vorzugsweise wird dabei das runde Stator-gebilde unter Zusammenpressen der einzelnen Polzähne aus der Nut der Rolliereinrichtung herausgenommen. Es kann dann in diesem Zustand weiterbearbeitet werden. Zum Zusammenhalten bzw. Zusammenpressen findet eine geeignete Greifvorrichtung Verwendung, beispielsweise ein Greifer mit einer geeigneten Anzahl von Backen, insbesondere ein drei Backen aufweisender Greifer oder ein zwei halbschalenförmige Backen aufweisender Greifer, wobei die Backen vorzugsweise im geschlossenen Zustand einen geschlossenen Ring bilden.

Im entsprechenden zusammengehaltenen oder zusammengepressten Zustand kann das Statorgebilde weiterbearbeitet und schließlich zu einer fertigen runden Statoreinheit fixiert, insbesondere vergossen, werden.

Die vorliegende Erfindung betrifft ferner eine Rolliereinrichtung zur Verwendung in einem Verfahren der vorstehend beschriebenen Art. Die Rolliereinrichtung ist dadurch gekennzeichnet, dass sie eine im Querschnitt an die Querschnittsform eines bewickelten Polzahnes angepasste Nut mit einem Einführungsabschnitt und einem Ringabschnitt aufweist.

Vorzugsweise ist die Nut für eine stehende Aufnahme der bewickelten Polzähne ausgebildet und besitzt eine geringere Tiefe als die Höhe der Polzähne.

Durch die Nut, deren Querschnittsform an die Querschnittsform eines bewickelten Polzahnes angepasst ist, folgt eine Führung der in den Einführungsabschnitt der Nut eingesetzten Polzähne bzw. der zahnstangenförmigen Polzahnreihe in den Ringabschnitt der Nut hinein und damit eine Verrundung bzw. Formung zu einem runden Stator. Die Nut dient somit als Führungskanal, der oben offen ist, so dass eine Herausnahme des erzeugten runden Statorgebildes mithilfe eines geeigneten Greifers erfolgen kann, wie vorstehend erläutert. Da die Nut insbesondere eine geringere Tiefe als die Höhe der Polzähne besitzt, kann die vorgesehene Greifeinrichtung die im Ringabschnitt der Nut angeordneten aneinandergereihten Polzähne ergreifen und aus der Nut herausheben. Die Polzähne werden dabei von der Greifeinrichtung zum runden Statorgebilde zusammengehalten bzw. zusammengepresst, einer Weiterbearbeitung unterzogen und schließlich zu einer fertigen Statoreinheit fixiert, insbesondere mit einem geeigneten Kunststoff vergossen.

Die Rolliereinrichtung kann dabei etwa plattenförmig ausgebildet sein, wobei in der Oberfläche der Platte die entsprechende Nut ausgebildet ist. Vorzugsweise besitzt die Nut einen geradlinigen Einführungsabschnitt, der vom Rand der Platte ausgeht und über einen spiralförmigen Übergangsabschnitt in den die Form des runden Stators wiedergebenden Ringabschnitt mündet.

Die Erfindung wird nachfolgend anhand eines Ausführungsbeispiels in Verbindung mit der Zeichnung im Einzelnen erläutert. Es zeigen:
- Figur 1: eine schematische Draufsicht auf eine Rolliereinrichtung;
- Figur 2: einen Schnitt entlang Linie A-A in Figur 1 und
- Figur 3: eine Draufsicht auf die Rolliereinrichtung der Figur 1 in drei verschiedenen Stadien einer Polzahnreihe.

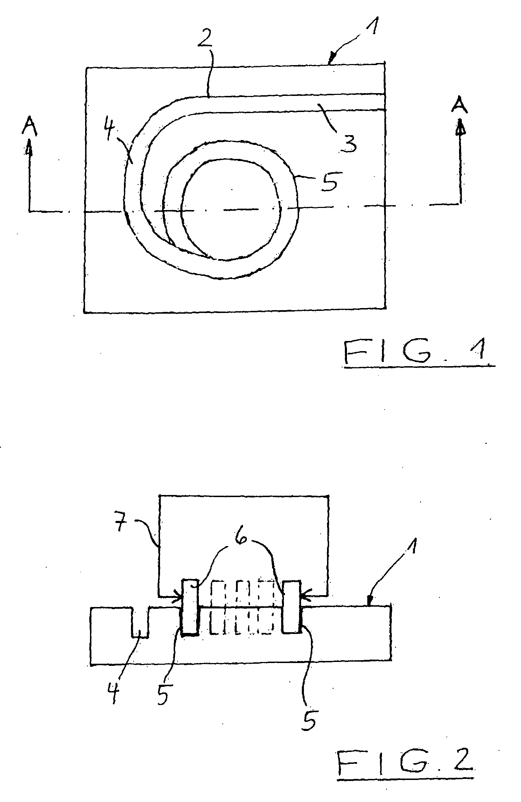

Die Figuren 1 und 2 zeigen schematisch eine Rolliereinrichtung 1, die zum Herstellen eines runden Stators dient. Die Rolliereinrichtung 1 ist plattenförmig ausgebildet und weist auf ihrer Oberseite eine Rolliernut bzw. Verrundungsnut 2 auf, die einen geradlinigen Einführungsabschnitt 3, einen sich hieran anschließenden spiralförmigen Übergangsabschnitt 4 und einen sich an den Übergangsabschnitt 4 anschließenden Ringabschnitt 5 aufweist. Der Ringabschnitt 5 ist als Kreisring ausgebildet.

Die Querschnittsform der Rolliernut 2 entspricht etwa der Querschnittsform eines bewickelten Polzahnes 6, der schematisch in Figur 2 angedeutet ist. Ein Stator setzt sich aus einer Vielzahl von derartigen bewickelten Polzähnen 6 zusammen, die zur Herstellung eines runden Stators in den geradlinigen Einführungsabschnitt 3 der Rolliernut 2 zur Ausbildung einer Polzahnreihe 10 eingeführt werden. Diese Polzahnreihe 10 wird dann über den spiralförmigen Übergangsabschnitt 4 bis in den Ringabschnitt 5 geschoben, und zwar bis in eine Endstellung, in der die aneinandergereihten bewickelten Polzähne 6 einen Kreisring bilden.

Wenn die Polzähne 6 diese Ringstellung eingenommen haben, werden sie mit einer geeigneten Greifeinrichtung 7, die in Figur 2 schematisch dargestellt ist, aus der Rolliernut 2 herausgenommen und im aneinandergepressten Zustand gehalten, so dass sie die Ringform beibehalten. Es können dann entsprechende Weiterbearbeitungen durchgeführt werden, bis das ringförmige Gebilde schließlich zur Ausbildung einer einstückigen Statoreinheit in einen geeigneten Kunststoff vergossen wird.

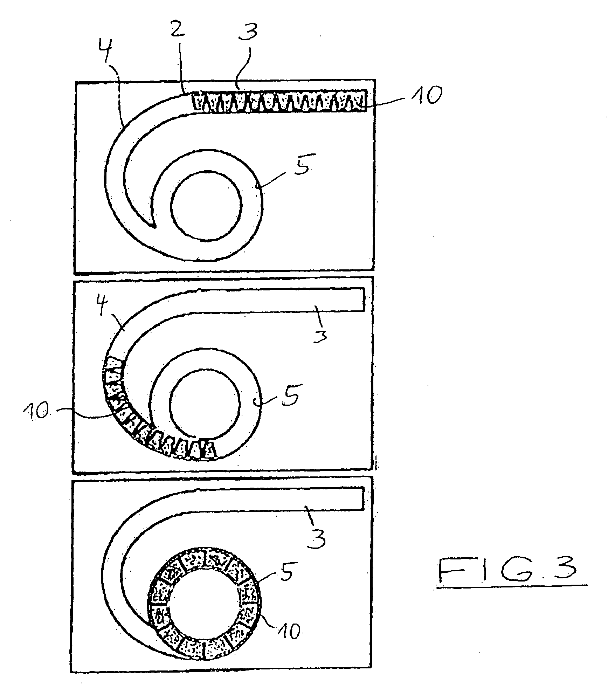

Bei der Ausführungsform der Figuren 1 und 2 werden die bewickelten Polzähne 6 einzeln hintereinander in den Einführungsabschnitt 3 der Rolliernut 2 eingeführt. Figur 3 zeigt eine Ausführungsform einer Rolliereinrichtung 1, bei der vor dem Einführen in die Rolliernut 2 die Polzähne 6 einzeln bewickelt und miteinander verschaltet werden, so dass sich eine zusammenhängende zahnstangenförmige Polzahnreihe 10 ergibt. Diese Polzahnreihe 10 wird dann in den Einführungsabschnitt 3 der Rolliernut 2 eingeschoben, durch den spiralförmigen Übergangsabschnitt 4 geschoben, bis der Ringabschnitt 5 erreicht ist. Wie in der unteren Darstellung von Figur 3 gezeigt, bildet die zahnstangenförmige Polzahnreihe 10 dann ein ringförmiges Gebilde, das in entsprechender Weise, wie in Figur 2 gezeigt, aus der Rolliernut 2 herausgehoben wird. Auch hier presst ein geeignetes Greifwerkzeug die zahnstangenförmige Polzahnreihe 10 zusammen, so dass die Ringform nach dem Herausheben beibehalten wird. Schließlich erfolgen auch hier eine Weiterbearbeitung sowie ein Fixieren, insbesondere Vergießen, zu einer Statoreinheit.

## Patentansprüche

1. Verfahren zur Herstellung eines runden Stators mit den folgenden Schritten:
- Einführen von bewickelten Polzähnen in den Einführungsabschnitt (3) einer Nut (2), deren Querschnittsform an die Querschnittsform eines bewickelten Polzahnes angepasst ist, einer Rolliereinrichtung (1) zur Ausbildung einer Polzahnreihe (10);
- Schieben der Polzahnreihe (10) in einen die runde Endform des Stators wiedergebenden Ringabschnitt (5) der Nut (2) der Rolliereinrichtung (1) und
- Herausnehmen des runden Statorgebildes aus der Nut (2) der Rolliereinrichtung (1) unter Zusammenhalten desselben und Weiterbearbeitung zur Ausbildung einer fertigen Statoreinheit.

2. Verfahren nach Anspruch 1, **dadurch gekennzeichnet, dass** die Polzähne (6) bewickelt und miteinander verschaltet werden, um eine zusammenhängende zahnstangenförmige Polzahnreihe (10) zu erhalten, die in den Einführungsabschnitt (3) der Nut (2) der Rolliereinrichtung (1) eingeführt wird.

3. Verfahren nach Anspruch 1 oder 2, **dadurch gekennzeichnet, dass** die Polzähne (6) oder die Polzahnreihe (10) in einen geradlinigen Einführungsabschnitt (3) der Nut (2) der Rolliereinrichtung (1) eingeführt werden.

4. Verfahren nach einem der vorangehenden Ansprüche,
**dadurch gekennzeichnet, dass** die Polzähne (6) oder die Polzahnreihe (10) vom Einführungsabschnitt (3) der Nut (2) über einen spiralförmigen Übergangsabschnitt (4) der Nut (2) in den Ringabschnitt (5) der Nut (2) der Rolliereinrichtung (1) geschoben werden.

5. Verfahren nach einem der vorangehenden Ansprüche,
**dadurch gekennzeichnet, dass** das runde Statorgebilde unter Zusammenpressen der einzelnen Polzähne (6) aus der Nut (2) der Rolliereinrichtung (1) herausgenommen und in diesem Zustand weiterbearbeitet wird.

6. Verfahren nach einem der vorangehenden Ansprüche,
**dadurch gekennzeichnet, dass** das runde Statorgebilde zur fertigen Statoreinheit fixiert wird.

7. Verfahren nach einem der vorangehenden Ansprüche,
**dadurch gekennzeichnet, dass** die Polzähne (6) bewickelt werden, um eine Vielzahl von Polzähnen (6) mit Einzelzahnwicklung zu erhalten.

8. Rolliereinrichtung (1) zur Verwendung in dem Verfahren nach einem der vorangehenden Ansprüche, **dadurch gekennzeichnet, dass** sie eine im Querschnitt an die Querschnittsform eines bewickelten Polzahnes (6) angepasste Nut (2) mit einem Einführungsabschnitt (3) und einem Ringabschnitt (5) aufweist.

9. Rolliereinrichtung (1) nach Anspruch 8, **dadurch gekennzeichnet, dass** die Nut (2) für eine stehende Aufnahme der bewickelten Polzähne (6) ausgebildet ist und eine geringerer Tiefe als die Höhe der Polzähne (6) besitzt.

## Claims

1. Method for producing a round stator, comprising the following steps:
- inserting wound pole teeth into the insertion section (3) of a slot (2), the cross-sectional shape of which is matched to the cross-sectional shape of a wound pole tooth, of a rolling device (1) in order to form a pole tooth row (10);
- pushing the pole tooth row (10) into a ring section (5) of the slot (2) of the rolling device (1), which ring section reproduces the round end shape of the stator; and
- removing the round stator structure from the slot (2) of the rolling device (1) with said stator structure being held together, and processing said stator structure further in order to form a finished stator unit.

2. Method according to Claim 1, **characterized in that** the pole teeth (6) are wound and interconnected in order to obtain a cohesive toothed rack-like pole tooth row (10) which is inserted into the insertion section (3) of the slot (2) of the rolling device (1).

3. Method according to Claim 1 or 2, **characterized in that** the pole teeth (6) or the pole tooth row (10) are/is inserted into a rectilinear insertion section (3) of the slot (2) of the rolling device (1).

4. Method according to one of the preceding claims, **characterized in that** the pole teeth (6) or the pole tooth row (10) are/is pushed from the insertion section (3) of the slot (2), via a spiral transition section (4) of the slot (2), into the ring section (5) of the slot (2) of the rolling device (1).

5. Method according to one of the preceding claims, **characterized in that** the round stator structure is removed from the slot (2) of the rolling device (1) with the individual pole teeth (6) being pressed together, and said stator structure is processed further in this state.

6. Method according to one of the preceding claims, **characterized in that** the round stator structure is fixed in order to form the finished stator unit.

7. Method according to one of the preceding claims, **characterized in that** the pole teeth (6) are wound in order to obtain a large number of pole teeth (6) with individual tooth winding.

8. Rolling device (1) for use in the method according to one of the preceding claims, **characterized in that** said rolling device has a slot (2), the cross section of said slot being matched to the cross-sectional shape of a wound pole tooth (6) and said slot having an insertion section (3) and a ring section (5).

9. Rolling device (1) according to Claim 8, **characterized in that** the slot (2) is designed for receiving the wound pole teeth (6) in a vertical manner and has a smaller depth than the height of the pole teeth (6).

## Revendications

1. Procédé de fabrication d'un stator circulaire ayant les stades suivantes :
- introduction de dents polaires bobinées dans le tronçon (3) d'introduction d'une rainure (2), dont la forme de section transversale est adaptée à la forme de la section transversale d'une dent polaire bobinée, d'un dispositif (1) de moletage pour former une rangée (10) de dents polaires ;
- poussée de la rangée (10) de dents polaires dans un tronçon (5) annulaire de la rainure (2) du dispositif (1) de moletage reproduisant la forme finale circulaire du stator et
- retrait du produit statorique circulaire de la rainure (2) du dispositif (1) de moletage en le maintenant et traitement ultérieur pour former une unité statorique finie.

2. Procédé suivant la revendication 1, **caractérisé en ce qu'**on bobine les dents (6) polaires et on les câble entre elles pour obtenir une rangée (10) de dents polaires en forme de crémaillère d'un seul tenant, qui est insérée dans le tronçon (3) d'insertion de la rainure (2) du dispositif (1) de moletage.

3. Procédé suivant la revendication 1 ou 2, **caractérisé en ce qu'**on introduit les dents (6) polaires ou la rangée (10) de dents polaires dans un tronçon (3) d'introduction rectiligne de la rainure (2) du dispositif (1) de moletage.

4. Procédé suivant l'une des revendications précédentes, **caractérisé en ce qu'**on pousse les dents (6) polaires ou la rangée (10) de dents polaires du tronçon (3) d'introduction de la rainure (2) dans le tronçon (5) annulaire de la rainure (2) du dispositif (1) de moletage en passant par un tronçon (4) de transition en forme de spirale.

5. Procédé suivant l'une des revendications précédentes, **caractérisé en ce qu'**on retire le produit statorique de la rainure (2) du dispositif (1) de moletage en resserrant les diverses dents (6) polaires et on les traite ultérieurement en cet état.

6. Procédé suivant l'une des revendications précédentes, **caractérisé en ce qu'**on fixe le produit statorique circulaire en l'unité statorique finie.

7. Procédé suivant l'une des revendications précédentes, **caractérisé en ce qu'**on bobine les dents (6) polaires pour obtenir une pluralité de dents (6) polaires ayant un bobinage de dent individuel.

8. Dispositif (1) de moletage à utiliser dans le procédé suivant l'une des revendications précédentes, **caractérisé en ce qu'**il a une rainure (2), qui est adapté en section transversale à la forme de la section transversale d'une dent (6) polaire bobinée et qui a un tronçon (3) d'introduction et un tronçon (5) annulaire.

9. Dispositif (1) de moletage suivant la revendication 8, **caractérisé en ce que** la rainure (2) est constituée pour une réception verticale des dents (6) polaires bobinées et a une profondeur plus petite que la hauteur des dents (6) polaires.
